# EUROPEAN PATENT SPECIFICATION

(11) **EP 1 790 455 B1**
(45) Date of publication and mention of the grant of the patent: **16.11.2011**
(21) Application number: 06009353.1
(22) Date of filing: 05.05.2006
(51) Int. Cl.: B29C 45/28

(54) **Heat dissipating apparatus for cylinders of injection molding machines**
Wärmeableitungsvorrichtung für Zylinder in Spritzgiessmaschinen
Dispositif dissipateur de chaleur pour cylindres dans des presses à injecter

(30) Priority: 29.11.2005 KR 20050114817
(43) Date of publication of application: 30.05.2007
(73) Proprietor: Yudo Co. Ltd., Hwasung-Si Gyeonggi-Do 445-911 (KR)
(72) Inventor: Yu, Young-Hee, Yangcheon-Gu Seoul 158-762 (KR)
(74) Representative: Banzer, Hans-Jörg

(56) References cited:
- EP-A- 0 407 683
- EP-A- 1 223 019
- EP-A- 1 316 405
- DE-A1- 4 300 334
- DE-U1-202004 007 135
- DE-U1-202005 012 705
- JP-A- 2004 050 543

## Description

### BACKGROUND OF THE INVENTION

### Field of the Invention

The present invention relates, in general, to cylinders of injection molding machines and, more particularly, to a heat dissipating apparatus for cylinders of injection molding machines, which includes both a piston bushing and a slide ring fitted around a valve pin of a cylinder piston, which dissipates heat, transferred from a manifold to the valve pin, to a cylinder housing defining the cylinder therein, and which uses air passing below the cylinder to cool both the valve pin and an inside guide bushing, thereby preventing leakage of resin from the cylinder.

### Description of the Related Art

Generally, a cylinder of an injection molding machine has a piston and a valve pin therein, with a plurality of O-rings fitted around the piston to allow the valve pin to easily move while preventing leakage of resin.

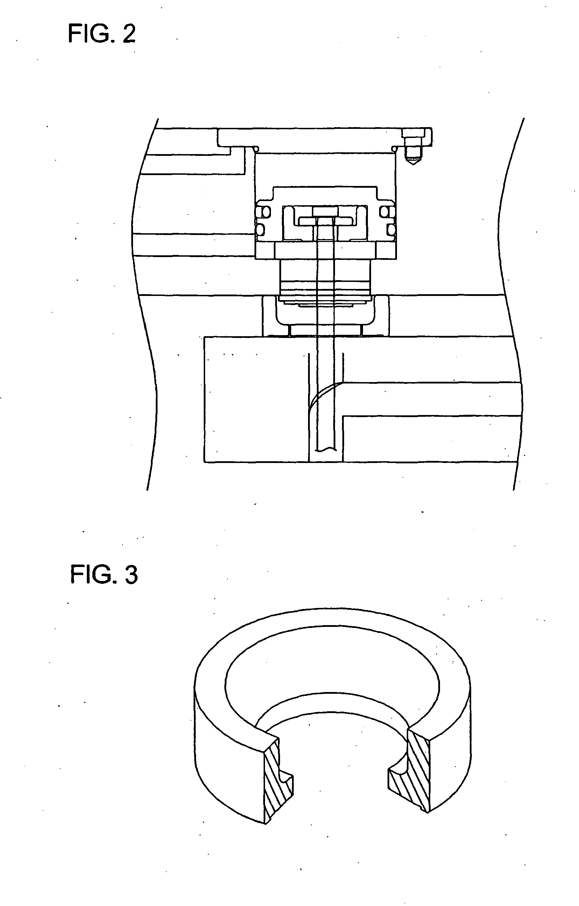

Furthermore, a guide bushing is installed between a cylinder housing and a manifold, as shown in FIG. 2, so that the guide bushing can prevents leakage of resin from the manifold toward the valve pin.

A conventional valve pin guide bushing is provided with a groove in an upper part thereof such that the groove has a predetermined width, as shown in FIG. 3, so that air can pass through the groove and can cool the pin guide bushing.

However, the conventional valve pin guide bushing is configured such that the pin guide bushing is completely embedded in the manifold or in a nozzle, so that the pin guide bushing is undesirably maintained at a temperature equal to the temperature of the heated manifold or of the heated nozzle. Thus, when the manifold or the nozzle has been heated to a high temperature, a temperature difference exists between the valve pin and the pin guide bushing, thus forming an undesired gap between the valve pin and the pin guide bushing.

If such a gap is formed between the valve pin and the pin guide bushing, resin may leak through the gap.

In the related art, the pin guide bushing is securely embedded in the manifold or in the nozzle, while the valve pin is secured to the piston using an O-ring. Thus, when the valve pin is heated to a high temperature, the O-ring undesirably hardens, so that the O-ring may not perform the original function thereof, that is, a sealing function, resulting in a gap being generated and resin leaking through the gap.

In the related art, the O-ring of the valve pin frequently becomes deformed by heat as described above, so that the O-ring must be frequently repaired or exchanged with a new one. Due to the frequent exchange of the O-rings, work efficiency during an inj-ection molding process is reduced. The conventional O-ring also complicates the internal construction of the piston.

A heat dissipating apparatus according to the preamble of independent claim 1 is known from EP 1 316 405 A1. Furthermore, EP 0 407 683 A2 relates to a pneumatic actuating mechanism for injection molding with a slide ring being fitted around a valve pin. Finally, DE 43 00 334 A1 discloses a hot-runner in which an outside guide bushing is installed between a cylinder housing and a manifold with a protrusion and a groove being formed on a lower surface of the outside guide bushing, whereby an inside guide bushing is installed in the outside guide bushing such that a head of the inside guide bushing protrudes outside an upper end of the outside guide bushing and is inserted into a locking hole of the cylinder housing with a valve pin passing through the inside guide bushing.

### SUMMARY OF THE INVENTION

Accordingly, the present invention has been made keeping in mind the above problems occurring in the related art, and an object of the present invention is to provide a heat dissipating apparatus for cylinders of injection molding machines, in which a valve pin is securely mounted to a piston, a piston bushing is mounted to the valve pin and, thereafter, a piston ring is mounted to the valve pin.

Another object of the present invention is to provide a heat dissipating apparatus for cylinders of injection molding machines, in which a head of an inside guide bushing protrudes outside both a manifold and a nozzle such that the inside guide bushing comes into contact with an outside guide bushing, and the outside guide bushing comes into close contact with the cylinder housing, which is called a "mold base" in the related art, thus dissipating heat, transferred to both the manifold and the valve pin, to the cylinder housing and, furthermore, causing the heated inside guide bushing to be secondarily cooled by air actuating the piston.

According to the present invention, the above objects are achieved by a heat dissipating apparatus as defined in claim 1. The dependent claims define preferred embodiments of the invention.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a side sectional view illustrating the construction of a cylinder of an injection molding machine having a heat dissipating apparatus according to the present invention;
FIG. 2 is a side sectional view illustrating the construction of a conventional cylinder of an injection molding machine; and
FIG. 3 is a perspective view schematically illustrating a conventional valve pin guide bushing.

### DETAILED DESCRIPTION OF THE INVENTION

Reference will now be made in greater detail to a preferred embodiment of the invention, an example of which is illustrated in the accompanying drawings.

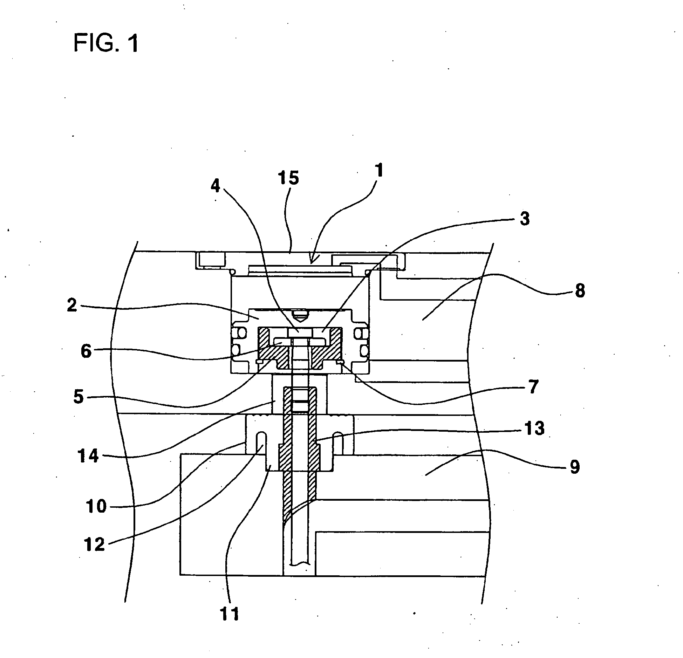

FIG. 1 is a side sectional view illustrating the construction of a cylinder of an injection molding machine having a heat dissipating apparatus according to the present invention.

As shown in FIG. 1, the heat dissipating apparatus for cylinders of injection molding machines according to the present invention comprises a piston 2, which is installed in a cylinder 1, with a valve pin locking hole 3 formed in the lower part of the piston 2. A valve pin 4 is axially coupled to the valve pin locking hole 3 of the piston 2. In the above state, a piston bushing 5 is fitted around the upper end of the valve pin 4, while a slide ring 6 is fitted around the upper end of the valve pin 4 at a predetermined position above the piston bushing 5. Furthermore, a locking ring 7 is mounted to the valve pin locking hole 3 at a position below the piston bushing 5, thus supporting the piston bushing 5 in the valve pin locking hole 3 of the piston 2. An outside guide bushing 10 is installed between a cylinder housing 8 and a manifold 9. Both a protrusion 11 and a groove 12 are formed on the lower surface of the outside guide bushing 10. An inside guide bushing 13 is installed in the outside guide bushing 10 such that the head of the inside guide bushing 13 protrudes outside the upper end of the outside guide bushing 10 and is inserted into a locking hole 14 of the cylinder housing 8. The valve pin 4 passes through and is coupled to the inside guide bushing 13. In the drawing, the reference numeral 15 denotes a cylinder cover.

The above-mentioned heat dissipating apparatus for cylinders of injection molding apparatuses according to the present invention will be operated as follows.

When the manifold 9 is heated during the operation of the injection molding machine, heat from the manifold 9 is transferred to the cylinder 1 through the valve pin 4.

In the above state, because the inside guide bushing 13 is in contact with both the outside guide bushing 10 and the valve pin 4 at a predetermined position above the manifold 9, the heat can be dissipated by being transferred to the cylinder housing 8 through the inside and outside guide bushings 10 and 13. Thus, the heat dissipating apparatus of the present invention protects the cylinder 1 from the heat of both the manifold 9 and the valve pin 4.

Described in detail, because the manifold 9 is in contact with the upper surface of the outside guide bushing 10, heat from the manifold 9 is transferred to the cylinder housing 8. Furthermore, the head of the inside guide bushing 13 is inserted into the locking hole 14 of the cylinder housing 8, so that, when air is introduced into the locking hole 14 to actuate the cylinder 1, the head of the inside guide bushing 13 can be cooled by the inlet air.

The valve pin 4, which is coupled to the locking hole 3 of the piston 2, is protected from heat by the piston bushing 5, thus protecting the O-ring fitted around the piston 2 from thermal damage. Furthermore, the slide ring 6 is fitted around the upper end of the valve pin 4, so that the valve pin 4 can be smoothly operated.

In the operation of the above-mentioned heat dissipating apparatus according to the present invention, the outside guide bushing 10, which is in close contact with the inside guide bushing 13, thermally expands to come into close contact with the cylinder housing 8. Thus, heat, which may be transferred to the valve pin 4, is transferred and dissipated to the cylinder housing 8, so that no gap is formed between the inside guide bushing 13 and the valve pin 4, thus preventing resin from leaking through the gap between the inside guide bushing 13 and the valve pin 4.

As apparent from the above description, the heat dissipating apparatus for cylinders of injection molding machines according to the present invention provides advantages in that a valve pin is coupled to a piston, a piston bushing is coupled to the upper end of the valve pin, and a piston ring is mounted to the valve pin. The head of an inside guide bushing protrudes outside both the manifold and the nozzle and is inserted into a locking hole of a cylinder housing. The inside guide bushing is also in close contact with the outside guide bushing, which is in close contact with the cylinder housing. Thus, heat, transferred from both the manifold and the valve pin, is efficiently dissipated to the cylinder housing. Furthermore, the head of the inside guide bushing is secondarily cooled by air, which actuates the piston. The heat dissipating apparatus of the present invention has a simple construction, thus being produced through a simple production process. Furthermore, the valve pin is in close contact with an inside guide bushing, so that resin can be prevented from leaking.

Furthermore, in the present invention, both the inside guide bushing and the outside guide bushing thermally expand and come into close contact with the cylinder housing, thus efficiently sealing the gap between the pin guide bushings and the cylinder housing without using a conventional O-ring between the piston and the cylinder housing. Thus, the expected life span of the piston is maximized while the construction thereof is simplified. Furthermore, the present invention is free from the disadvantages caused by the conventional O-rings.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A heat dissipating apparatus for cylinders of injection molding machines, comprising a cylinder (1); a cylinder housing (8) with a locking hole (14); a manifold (9);
a piston (2) instilled in the cylinder (1), with a valve pin locking hole (3) formed in the piston (2);
a valve pin (4) coupled to the valve pin locking hole (3) of the piston (2), with a piston bushing (5) fitted around an upper end of the valve pin (4), and a locking ring (7) mounted to the valve pin locking hole (3) at a position below the piston bushing (5);
**characterized in that**
a slide ring (6) is fitted around the upper end of the valve pin (4) at a predetermined position above the piston bushing (5);
an outside guide bushing (10) is installed between the cylinder housing (8) and the manifold (9), with both a protrusion (11) and a groove (12) formed on a lower surface of the outside guide bushing (10); and
an inside guide bushing (13) is installed in the outside guide bushing (10) such that a head of the inside guide bushing (13) protrudes outside an upper end of the outside guide bushing (10) and is inserted into the locking hole (14) of the cylinder housing (8), with the valve pin (4) passing through the inside guide bushing (13), wherein the inside guide bushing (13) is cooled by a cooling fluid, such as air, which has been introduced from the locking hole (14) of the cylinder housing (8) for actuating the cylinder (1).

2. The heat dissipating apparatus for cylinders of injection molding machines according to claim 1, wherein the outside guide bushing (10) is fitted around the inside guide bushing (13), which is coupled to the valve pin (4), so that heat from the valve pin (4) is transferred to the outside guide bushing (10) through the inside guide bushing (13).

3. The heat dissipating apparatus for cylinders of injection molding machines according to claim 1 or claim 2, wherein the piston bushing (5) is installed in the piston (2), which is coupled to the valve pin (4).

## Patentansprüche

1. Wärmeabteitungsvorrichtung für Zylinder von Spritzgießmaschinen, umfassend:
einen Zylinder (1);
ein Zylindergehäuse (8) mit einem Arretierungsloch (14);
einen Verteiler (9);
einen Kolben (2), welcher in dem Zylinder (1) eingebaut ist, mit einem in dem Kolben (2) ausgebildeten Ventilstiftarretierungsloch (3);
einen Ventilstift (4), welcher mit dem Ventilstiftarretierungsloch (3) des Kolbens (2) gekoppelt ist, mit einer Kolbenbuchse (5), welche um ein oberes Ende des Ventilstifts (4) angepasst ist, und einen Sicherungsring (7), welcher an dem Ventilstiftarretierungsloch (3) an einer Position unterhalb der Kolbenbuchse (5) angebracht ist;
**dadurch gekennzeichnet, dass**
ein Gleitring (6) um das obere Ende des Ventilstifts (4) an einer bestimmten Position oberhalb der Kolbenbuchse (5) angepasst ist;
eine äußere Führungsbuchse (10) zwischen dem Zylindergehäuse (8) und dem Verteiler (9) angebracht ist, wobei sowohl ein Vorsprung (11) als auch eine Nut (12) an einer unteren Oberfläche der äußeren Führungsbuchse (10) ausgebildet sind; und
eine innere Führungsbuchse (13) in der äußeren Führungsbuchse (10) angebracht ist, so dass ein Kopf der inneren Führungsbuchse (13) aus einem oberen Ende der äußeren Führungsbuchse (10) herausragt und in das Arretierungsloch (14) des Zylindergehäuses (8) eingefügt ist, wobei der Ventilstift (4) die innere Führungsbuchse (13) durchläuft, wobei die innere Führungsbuchse (13) durch eine Kühlflüssigkeit, wie beispielsweise Luft, welche von dem Arretierungsloch (14) des Zylindergehäuses (8) eingeführt wird, um den Zylinder (1) zu betätigen, gekühlt wird.

2. Wärmeableitungsvorrichtung für Zylinder in Spritzgießmaschinen nach Anspruch 1, wobei die äußere Führungsbuchse (10), welche um die innere Führungsbuchse (13), welche mit dem Ventilstift (4) verbunden ist, so dass Wärme von dem Ventilstift (4) an die äußere Führungsbuchse (10) durch die innere Führungsbuchse (13) übertragen wird, angepasst ist.

3. Wärmeableitungsvorrichtung für Zylinder von Spritzgießmaschinen nach Anspruch 1 oder Anspruch 2, wobei die Kolbenbuchse (5) an dem Kolben (2), welcher mit dem Ventilstift (4) verbunden ist, angebracht ist.

## Revendications

1. Appareil de dissipation de chaleur pour cylindres de machines de moulage par injection, comprenant un cylindre (1), un logement de cylindre (8), avec un trou de blocage (14), un collecteur (9) ;
un piston (2) installé dans le cylindre (1), avec un trou de blocage de goupille de soupape (3) ménagé dans le piston (2) ;
une goupille de soupape (4) raccordée au trou de blocage de goupille de soupape (3) du piston (2), avec une buselure de piston (5) installée autour d'une extrémité supérieure de la goupille de soupape (4) et une bague de blocage (7) montée sur le trou de blocage de la goupille de soupape (3), dans une position située sous la buselure de piston (5),
**caractérisé en ce que**
une bague coulissante (6) est installée autour de l'extrémité supérieure de la goupille de soupape (4) dans une position prédéterminée au dessus de la buselure de piston (5) ;
une douille de guidage extérieure (10) est installée entre le logement de cylindre (8) et le collecteur (9), avec une saillie (11) et une cannelure (12) ménagées sur une surface inférieure de la buselure de guidage extérieure (10) ; et
une buselure de guidage intérieure (13) est installée dans la buselure de guidage extérieure (10) de sorte qu'une tête de la buselure de guidage intérieure (13) ressorte à l'extérieur d'une extrémité supérieure de la buselure de guidage extérieure (10) et soit insérée dans le trou de blocage (14) du logement de cylindre (8), avec la goupille de soupape (4) passant à travers la buselure de guidage intérieure (13), dans lequel la buselure de guidage intérieure (13) est refroidie par un fluide de refroidissement, comme l'air, qui a été introduit par l'orifice de blocage (14) du logement de cylindre (8), afin d'actionner le cylindre (1).

2. Appareil de dissipation de chaleur pour cylindres de machines de moulage par injection, selon la revendication 1, dans lequel la buselure de guidage extérieure (10) est installée autour de la buselure de guidage intérieure (13), qui est raccordée à la goupille de soupape (4), de sorte que la chaleur provenant de la goupille de soupape (4) soit transférée vers la buselure de guidage extérieure (10) à travers la buselure de guidage intérieure (13).

3. Appareil de dissipation de chaleur pour cylindres de machines de moulage par injection selon la revendication 1 ou la revendication 2, dans lequel la buselure de piston (5) est installée dans le piston (2) qui est raccordé à la goupille de soupape (4).
